# EUROPEAN PATENT SPECIFICATION

(11) **EP 2 693 029 B1**
(45) Date of publication and mention of the grant of the patent: **28.06.2017**
(21) Application number: 12764757.6
(22) Date of filing: 20.02.2012
(51) Int. Cl.: F02D 41/40, F02D 41/22, F02D 41/38, F02D 41/30, F02D 35/02, F02D 41/24, F02D 41/00

(54) **METHOD AND DEVICE FOR CONTROLLING PILOT INJECTION TIMING WHEN ENGINE COMBUSTION DIAGNOSIS SIGNAL IS ABNORMAL**
VERFAHREN UND VORRICHTUNG ZUR VOREINSPRITZUNGSTIMING-STEUERUNG BEI ABNORMALEN MOTORVERBRENNUNGS-DIAGNOSESIGNALEN
PROCÉDÉ ET DISPOSITIF PERMETTANT DE CONTRÔLER LE CALAGE DE L'INJECTION PILOTE LORSQUE LE SIGNAL DE DIAGNOSTIC DE LA COMBUSTION DU MOTEUR EST ANORMAL

(30) Priority: 31.03.2011 JP 2011079791
(43) Date of publication of application: 05.02.2014
(73) Proprietor: Mitsubishi Heavy Industries, Ltd., Tokyo 108-8215 (JP)
(72) Inventor: SAEKI, Yasuhiro, Tokyo 108-8215 (JP)
(74) Representative: Hoffmann Eitle
(86) International application number: PCT/JP2012/054020
(87) International publication number: WO 2012/132629

(56) References cited:
- EP-A1- 1 760 300
- JP-A- 11 050 897
- JP-A- 55 107 070
- JP-A- 2005 069 042
- JP-A- 2006 299 832
- JP-A- 2008 248 750
- US-A- 5 887 566
- US-A1- 2003 164 166
- US-A1- 2004 118 557
- US-A1- 2005 274 352
- US-A1- 2008 006 244
- US-A1- 2008 167 786

## Description

### TECHNICAL FIELD

The present invention is applied to a multiple cylinder gas engine, a diesel engine, or the like having a combustion diagnosis device, and relates to a control method and device used when an abnormality occurs in a combustion diagnosis signal, or more particularly to a method and a device for controlling a pilot injection timing when an abnormality occurs in a combustion diagnosis signal following a diagnosis of less than optimal combustion.

### BACKGROUND ART

EP 1 760 300 A1 discloses a system having a determination unit for determining a magnitude relative to phasing of combustion of fuel in a cylinder, based on acquired pressure and crankshaft angle. A correction unit corrects an injection law based on the determined magnitude in order to maintain, at nominal level, combustion noise in a diesel engine and emission of pollutants by the engine. The determination unit is connected to acquisition units that respectively acquire pressure in cylinders of the engine and the crankshaft angle.

US 2004/118557 A1 discloses a method and an apparatus for introducing pilot fuel into a piston cylinder of an operating gaseous fueled internal combustion engine monitoring a set of engine parameters, determining engine load and engine speed from the set of engine parameters, introducing a first portion of the gaseous fuel into the cylinder where the first portion of gaseous fuel forms a substantially homogeneous mixture comprising gaseous fuel and air prior to combustion, and introducing a pilot fuel to avoid an excessive knocking range for the engine.

US 5 887 566 A discloses a gas engine with electronically controlled and/or regulated injection of relatively small quantities of injection oil in such a way as to improve the metering accuracy of the injection oil quantity, the flexibility with which the required ignition oil quantity is provided and the ability to freely preset the timing of ignition oil injection.

US 2005/274352 A1 describes a closed-loop electronic control system for controlling combustion in a diesel engine operating with highly premixed combustion (PCCI).

In a conventional technique, a combustion diagnosis device is provided in a multiple cylinder gas engine or a diesel engine to diagnose a combustion condition of each cylinder. When abnormal combustion known as knocking or misfiring occurs in one or a plurality of the cylinders, the combustion diagnosis device diagnoses abnormal combustion, and either adjusts an output or stops the engine by controlling a fuel injection amount and a fuel injection timing.

For example, Patent Document 1 (Japanese Patent Application Publication No. 2005-69042) discloses an operation control device for use when abnormal combustion occurs in a gas engine. The operation control device includes: an in-cylinder pressure detector that detects an in-cylinder pressure of the gas engine; and an abnormal combustion diagnosis device that determines whether or not abnormal combustion such as knocking or misfiring has occurred in a cylinder of the engine on the basis of an in-cylinder pressure detection value from the in-cylinder pressure detector. When the abnormal combustion diagnosis device determines that abnormal combustion has occurred, an injection timing at which gas is injected into the cylinder and a torch ignition timing (a precombustion chamber ignition timing) are adjusted.

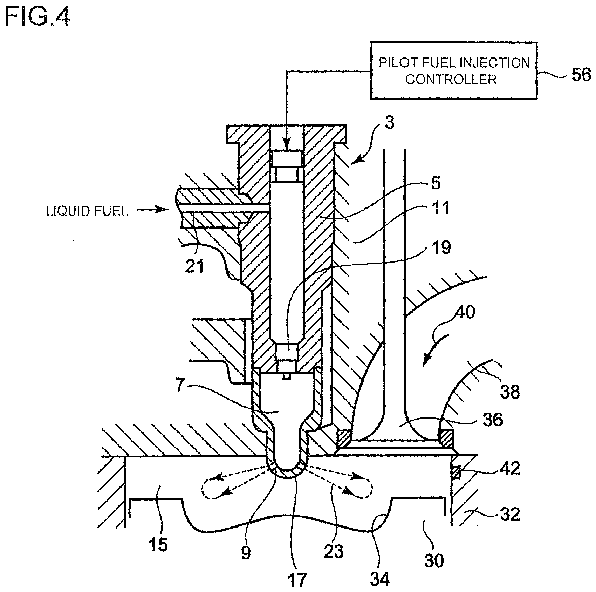

Further, Patent Document 1 discloses a pilot fuel injection device as a torch ignition device. A structure thereof will now be described with reference to Fig. 4, which illustrates an embodiment of the present invention.

A pilot fuel injection device 3 is constituted by a main body 5, and a precombustion chamber cap 9 including a precombustion chamber 7. The precombustion chamber cap 9 is fixed to a cylinder head 11 by fastening the main body 5 to the cylinder head 11.

Further, a plurality of precombustion chamber discharge ports 17 connecting the precombustion chamber 7, which is formed in an interior of the precombustion chamber cap 9, to a main combustion chamber 15 are formed in a circumferential direction of the precombustion chamber cap 9, and a pilot fuel injection valve 19 is provided in an interior of the main body 5. A liquid fuel such as light oil is injected into the precombustion chamber 7 through a liquid fuel passage 21.

The liquid fuel (pilot fuel) is injected into the precombustion chamber 7 through the pilot fuel injection valve 19, thereby igniting and burning an air-fuel mixture that flows back into the precombustion chamber 7 from the main combustion chamber 15, and as a result, a torch flame 23 is generated. The torch flame 23 is discharged into the main combustion chamber 15 through the precombustion chamber discharge ports 17.

Patent Document 1: Japanese Patent Application Publication No. 2005-69042
Patent Document 2: Japanese Patent Application Publication No. 2006-299832

As shown in Fig. 5 of the present invention, in the pilot fuel injection device disclosed in Patent Document 1, a relationship between a pilot fuel injection timing t at which the pilot fuel is injected into the precombustion chamber 7 and an in-cylinder pressure p in the main combustion chamber 15 is such that the in-cylinder pressure p tends to increase when the pilot fuel injection timing t is advanced and decrease when the pilot fuel injection timing t is retarded. However, when the pilot fuel injection timing t is advanced excessively, abnormal combustion known as knocking results, and when the pilot fuel injection timing t is retarded excessively, misfiring results.

Therefore, in accordance with a diagnosis result obtained by the combustion diagnosis device, the pilot fuel injection timing is corrected by a predetermined amount to a retardation side when the in-cylinder pressure p is higher than an optimal range and conversely corrected by a predetermined amount to an advancement side when the in-cylinder pressure p is lower than the optimal range, and this correction is performed repeatedly until the pilot fuel injection timing is returned to the optimal range.

However, if a correction method (so-called integrated correction) of accumulating advancements or retardations by repeatedly correcting the pilot fuel injection timing by a predetermined amount to the advancement side or the retardation side is performed until a diagnosis result indicating that the combustion has been returned to the optimal range by the correction is output, a diagnosis result indicating that combustion is less than optimal may continue to be input into a pilot fuel injection control device (an injection timing control device) even though the combustion condition has been returned to an optimal condition such that combustion is performed at an appropriate in-cylinder pressure in a case where a fault occurs in the combustion diagnosis device (for example, when a signal is not output correctly due to an abnormality in a D/A converter or the like) or a case where the signal indicating the combustion diagnosis result is not input correctly into the pilot fuel injection control device (the injection timing control device) from the combustion diagnosis device (for example, when the signal is not input correctly due to an abnormality in an A/D converter or the like). In this case, the pilot fuel injection timing may continue to be corrected to the advancement side or the retardation side in accordance with the diagnosis result, with the result that an operation is continued with excessive advancement or retardation of the injection timing.

A technique of applying a limitation to the injection timing and so on is disclosed in Patent Document 2 (Japanese Patent Application Publication No. 2006-299832). However, Patent Document 2 is a method of setting upper limit information in relation to an injection timing in advance using a map. Determining values to be set on the map is both time-consuming and laborious, and moreover, a capacity of a storage device must be increased, leading to an increase in a size of a control device. Further, Patent Document 2 is a technique of controlling a pilot injection in a diesel engine and a pilot injection start timing in association with each other, and does not disclose pilot injection timing control in a case where an abnormality occurs in a combustion diagnosis signal following a diagnosis of less than optimal combustion.

### DISCLOSURE OF THE INVENTION

In consideration of the problems described above, an object of the present invention is therefore to provide a method and a device for controlling a pilot injection timing when an abnormality occurs in a combustion diagnosis signal relating to an engine, with which, even in a case where a signal indicating a combustion diagnosis result transmitted to a fuel injection control device (an injection timing control device) from a combustion diagnosis device that determines whether or not combustion is optimal, including whether or not knocking or misfiring has occurred in the engine, is output or input while indicating an incorrect diagnosis result, correction of a fuel injection timing on the basis of the combustion diagnosis result can be maintained within an allowable range so that a corrected operation based on the signal from the combustion diagnosis device can be improved in safety and reliability.

The object of the invention is achieved by the subject matter of the independent claims. Advantageous embodiments are disclosed by the dependent claims.

A first example is a method of controlling a pilot injection timing when an abnormality occurs in a combustion diagnosis signal relating to an engine having a combustion diagnosis device that determines whether or not combustion is optimal, and a fuel injection control device that controls a fuel injection device upon reception of a diagnosis result from the combustion diagnosis device, the method including the steps of: diagnosing a combustion condition of respective cylinders using the combustion diagnosis device; repeatedly correcting a fuel injection timing set in advance on the basis of an engine rotation speed and an engine load in relation to a cylinder in which combustion is determined to be less than optimal such that a correction amount accumulates until combustion is determined to be optimal; setting an allowable correction range of the fuel injection timing on the basis of data indicating past fuel injection timings of a plurality of cylinders; determining whether or not a newly corrected injection timing is within the allowable correction range; and operating the fuel injection device at the newly corrected injection timing when a result of the determination is within the allowable correction range.

According to the first example, in a case where correction is performed repeatedly such that the correction amount accumulates until combustion is determined to be optimal, the allowable correction range of the fuel injection timing is set on the basis of the data indicating the past fuel injection timings of the plurality of cylinders, a determination is made as to whether or not the newly corrected fuel injection timing is within the allowable correction range of the fuel injection timing, and when the determination result is within the allowable correction range, the fuel injection device is operated at the newly corrected injection timing. Hence, the danger of correcting the fuel injection timing excessively to an advancement side in relation to the cylinder in which combustion is determined by the combustion diagnosis device to be less than optimal such that an in-cylinder pressure becomes too high or correcting the fuel injection timing excessively to a retardation side such that misfiring results can be avoided, and therefore correction of the fuel injection timing based on the diagnosis result from the combustion diagnosis device can be maintained within an appropriate range.

As a result, an operation at an excessively advanced or retarded fuel injection timing can be avoided, and therefore a corrected operation based on the signal from the combustion diagnosis device can be improved in safety and reliability.

In the first example, when the result of the determination is outside the allowable correction range, the fuel injection control device is preferably operated at a previous injection timing.

By limiting correction thus such that when the newly corrected injection timing is outside the allowable correction range of the fuel injection timing, the previous injection timing (an injection timing implemented during immediately preceding control) is used, the fuel injection timing can be maintained within an allowable range, and as a result, combustion outside the allowable range can be prevented.

Further, in the first example, the allowable correction range is preferably set in the step of setting the allowable correction range by calculating an average value of immediately preceding fuel injection timings of the plurality of cylinders, and attaching an upper/lower limit allowable range to the calculated average value.

To set the allowable correction range, first, an average fuel injection timing of all of the cylinders of the multiple cylinder engine is calculated. In this case, an arithmetic mean value is calculated in relation to cylinders including the cylinder in which combustion is diagnosed as being less than optimal by the combustion diagnosis device and all of the cylinders diagnosed as being optimal. Further, using the data indicating the immediately preceding injection timings as past data, an upper/lower limit value allowable range is attached to the average value.

An upper limit value of the upper/lower limit allowable range is set on the basis of experiments or simulation calculations as a value at which high pressure causes a mechanical abnormality such as wear deterioration, cracking, or other damage to occur in the cylinder, leading to a problem in terms of durability. A lower limit value is set on the basis of experiments or simulation calculations as a value at which misfiring results.

Further, since the allowable correction range is set on the basis of the immediately preceding fuel injection data for the plurality of cylinders, the allowable correction range does not have to be stored in advance as a map, and therefore a capacity of a storage unit can be reduced and a control device can be simplified.

Furthermore, in the first example, the allowable correction range is preferably set in the step of setting the allowable correction range by calculating an average value of the fuel injection timings of the plurality of cylinders over a fixed past time period, and attaching an upper/lower limit allowable range to the average value obtained as a calculation result.

In this case, the allowable correction range is preferably set on the basis of fuel injection data from a fixed past time period of one hour, one day, or the like, for example. In so doing, the allowable correction range can be set to reflect a history of past operating conditions, and therefore a more appropriate allowable correction range can be set.

Moreover, in the first example, more specifically, the engine is a multiple cylinder gas engine including a precombustion chamber, and the fuel injection timing is a timing at which pilot fuel is injected into the precombustion chamber.

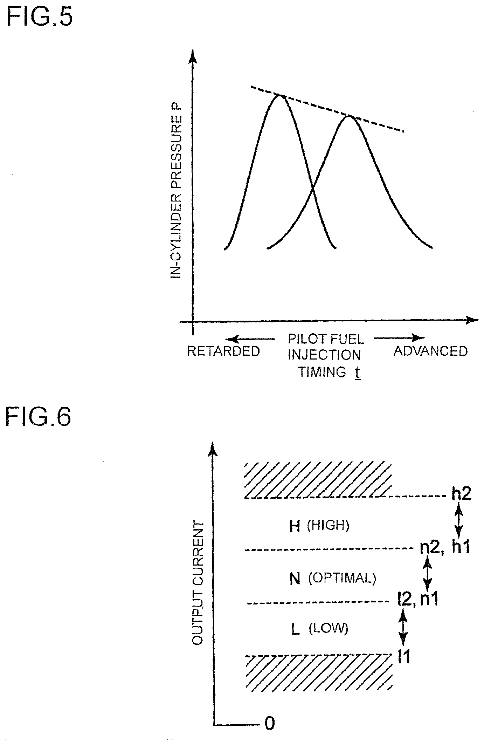

As shown in Fig. 5, in a pilot fuel injection device, a relationship between a pilot fuel injection timing t and an in-cylinder pressure p is such that the in-cylinder pressure p tends to increase when the pilot fuel injection timing t is advanced and decrease when the pilot fuel injection timing t is retarded. However, when the pilot fuel injection timing t is advanced excessively, abnormal combustion known as knocking results, and when the pilot fuel injection timing t is retarded excessively, misfiring results.

Therefore, in accordance with the diagnosis result obtained by the combustion diagnosis device, the pilot fuel injection timing is corrected by a predetermined amount to the retardation side of a current timing when the in-cylinder pressure p is higher than the optimal range and conversely corrected by a predetermined amount to the advancement side of the current timing when the in-cylinder pressure p is lower than the optimal range, and this correction is performed repeatedly until an optimal combustion condition is restored.

During correction for restoring the optimal condition, according to the first example, even when an incorrect signal is output from the combustion diagnosis device such that the pilot fuel injection timing continues to be corrected to the advancement side or the retardation side, the pilot fuel injection timing can be maintained within the allowable correction range, and therefore the danger of continuing an operation at an offset injection timing can be avoided.

A second example is a device for controlling a pilot injection timing when an abnormality occurs in a combustion diagnosis signal relating to an engine having a combustion diagnosis device that determines whether or not combustion is optimal, and a fuel injection control device that controls a fuel injection device upon reception of a diagnosis result from the combustion diagnosis device, the device including: an injection timing calculation unit which calculates a preset fuel injection timing on the basis of an engine rotation speed and an engine load; an injection timing correction unit which repeatedly corrects the fuel injection timing calculated by the injection timing calculation unit in relation to a cylinder in which combustion is determined by the combustion diagnosis device to be less than optimal such that a correction amount accumulates until combustion is determined to be optimal; an allowable correction range setting unit which sets an allowable correction range of the fuel injection timing on the basis of data indicating past fuel injection timings of a plurality of cylinders; an injection timing determination unit which determines whether or not a current fuel injection timing corrected by the injection timing correction unit is within the allowable correction range set by the allowable correction range setting unit; and a command control unit which outputs a command to the fuel injection control device to perform injection at the newly corrected fuel injection timing when the determination unit determines that the newly corrected fuel injection timing is within the allowable correction range.

According to the second example, in a case where the injection timing correction unit is provided to correct the fuel injection timing calculated by the injection timing calculation unit repeatedly such that the correction amount accumulates until combustion is determined to be optimal, the allowable correction range of the fuel injection timing is set by the allowable correction range setting unit on the basis of the data indicating the past fuel injection timings of the plurality of cylinders, a determination is made by the injection timing determination unit as to whether or not the current fuel injection timing corrected by the injection timing correction unit is within the allowable correction range set by the allowable correction range setting unit, and when the determination result is within the allowable correction range, injection is performed at the newly corrected fuel injection timing by the command control means. Hence, the danger of correcting the fuel injection timing excessively to the advancement side in relation to the cylinder in which combustion is determined by the combustion diagnosis device to be less than optimal such that the in-cylinder pressure becomes too high or correcting the fuel injection timing excessively to the retardation side such that misfiring results can be avoided, and therefore correction of the fuel injection timing based on the diagnosis result from the combustion diagnosis device can be maintained within an appropriate range.

In the second invention, when the determination result obtained by the injection timing determination unit is outside the injection timing correction unit is provided to correct the fuel injection timing calculated by the injection timing calculation unit repeatedly such that the correction amount accumulates until combustion is determined to be optimal, the allowable correction range of the fuel injection timing is set by the allowable correction range setting unit on the basis of the data indicating the past fuel injection timings of the plurality of cylinders, a determination is made by the injection timing determination unit as to whether or not the current fuel injection timing corrected by the injection timing correction unit is within the allowable correction range set by the allowable correction range setting unit, and when the determination result is within the allowable correction range, injection is performed at the newly corrected fuel injection timing by the command control means. Hence, the danger of correcting the fuel injection timing excessively to the advancement side in relation to the cylinder in which combustion is determined by the combustion diagnosis device to be less than optimal such that the in-cylinder pressure becomes too high or correcting the fuel injection timing excessively to the retardation side such that misfiring results can be avoided, and therefore correction of the fuel injection timing based on the diagnosis result from the combustion diagnosis device can be maintained within an appropriate range.

In the second example, when the determination result obtained by the injection timing determination unit is outside the
Fig. 1 is a view showing an overall configuration of an embodiment of the present invention applied to a pilot fuel injection into a precombustion chamber of a multiple cylinder gas engine including the precombustion chamber;
Fig. 2 is a block diagram showing a configuration of a pilot fuel injection timing control unit;
Fig. 3 is a flowchart showing control executed by the pilot fuel injection timing control unit;
Fig. 4 is a sectional view showing main parts of a pilot fuel injection device;
Fig. 5 is an illustrative view showing a relationship between a pilot fuel injection timing and an in-cylinder pressure; and
Fig. 6 is an illustrative view showing an example of output of a diagnosis result from a combustion diagnosis device.

### BEST MODE FOR CARRYING OUT THE INVENTION

The present invention will be described in detail below using an embodiment shown in the drawings.

Note, however, that unless specific description is provided to the contrary, dimensions, materials, shapes, relative arrangements, and so on of constituent components described in the embodiment are not intended to limit the scope of the present invention, and are merely descriptive examples.

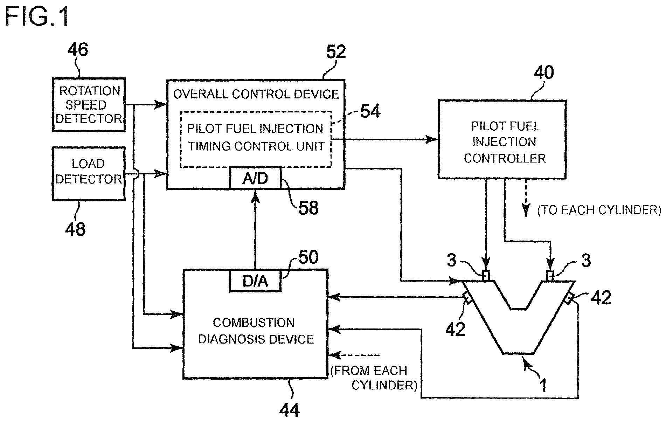

Fig. 1 is a view showing an overall configuration of an embodiment of the present invention applied to a pilot fuel injection device 3 that injects pilot fuel into a precombustion chamber 7 of a V type multiple cylinder gas engine 1.

Fig. 4 shows a structure of the pilot fuel injection device 3. The pilot fuel injection device 3 is constituted by a main body 5 and a precombustion chamber cap 9 including a precombustion chamber 7. The precombustion chamber cap 9 is fixed to a cylinder head 11 by fastening the main body 5 to the cylinder head 11.

Further, a plurality of precombustion chamber discharge ports 17 connecting the precombustion chamber 7, which is formed in an interior of the precombustion chamber cap 9, to a main combustion chamber 15 are formed in a circumferential direction of the precombustion chamber cap 9. Note that the main combustion chamber 15 is formed by a piston 30, the cylinder head 11, and a cylinder block 32, and a piston cavity 34 is formed in an upper surface of the piston 30.

A pilot fuel injection valve 19 is provided in an interior of the main body 5, and a liquid fuel such as light oil is injected into the precombustion chamber 7 through a liquid fuel passage 21.

Further, a lean air-fuel mixture of gas fuel and air supplied to an intake passage 38 via an intake valve 36 flows into the main combustion chamber 15.

A pilot injection timing and a pilot injection amount are controlled in accordance with a command from a pilot fuel injection controller 40, whereby the pilot fuel injection valve 19 opens and closes such that the liquid fuel (the pilot fuel) is injected into the precombustion chamber 7 through the precombustion chamber discharge ports 17. As a result, the lean air-fuel mixture charged into the precombustion chamber 7 from the main combustion chamber 15 through the precombustion chamber discharge ports 17 is ignited and burned so as to form a torch flame 23, and the torch flame 23 is discharged into the main combustion chamber 15 through the precombustion chamber discharge ports 17.

As shown in Fig. 1, meanwhile, an in-cylinder pressure detector 42 (see Fig. 4) is provided in each cylinder to detect an in-cylinder pressure in the main combustion chamber 15, and a detected value of variation in the in-cylinder pressure of each cylinder is input into a combustion diagnosis device 44. Signals from an engine rotation speed detector 46 and an engine load detector 48 are also input, and on the basis of these input signals, a combustion condition of the engine 1 is diagnosed in relation to each cylinder.

The combustion diagnosis device 44 diagnoses whether or not an in-cylinder pressure p is in an H (high) range or an L (low) range relative to an N (optimal) range, and outputs a corresponding diagnosis result. The output diagnosis result is converted from a digital signal (D) into an analog signal (A) by a D/A converter 50, whereupon, as shown in Fig. 6, for example, the analog signal is output as a current value of 11 to 12 in the case of L (low), a current value of n1 to n2 in the case of N (optimal), and a current value of h1 to h2 in the case of H (high).

By detecting the output current value, it is possible to determine, for example, that the in-cylinder pressure is slightly lower than the optimal in-cylinder pressure when the output current value is between 11 and 12, and that the in-cylinder pressure is slightly higher than the optimal in-cylinder pressure when the output current value is between h1 and h2.

The D/A-converted output signal from the combustion diagnosis device 44 is input into an overall control device 52. The overall control device 52 controls an overall operating condition of the engine 1, including controlling an engine rotation speed by controlling a fuel gas supply solenoid valve, not shown in the drawings, in order to adjust an amount of gas fuel supplied to the intake passage 38 (see Fig. 4), controlling an air-fuel ratio by controlling a rotation speed of a turbo charger, not shown in the drawings, provided in the intake passage 38, and so on.

The signal output from the combustion diagnosis device 44 is input into a pilot fuel injection timing control unit (a pilot fuel injection timing control device) 54 included in the overall control device 52 in order to control a pilot fuel injection timing. A result of this control is output to a pilot fuel injection controller 40, whereupon the pilot fuel injection controller 40 operates a pilot fuel injection device 3 provided in each cylinder.

Note that the pilot fuel injection controller 40 and the pilot fuel injection timing control unit 54 together constitute a fuel injection control device for the pilot fuel.

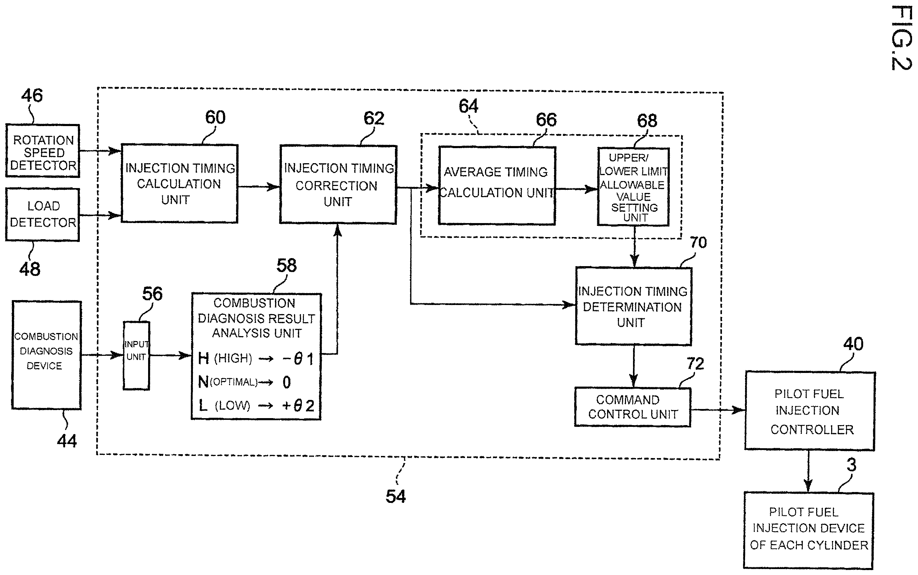

Referring to Fig. 2, control performed by the pilot fuel injection timing control unit 54 when combustion is less than optimal will now be described.

In an input unit 56 of the pilot fuel injection timing control unit 54, an analog signal from the combustion diagnosis device 44 is converted into a digital signal by an A/D converter 58 and then input into a combustion diagnosis result analysis unit 59. The combustion diagnosis result analysis unit 59 sets correction amounts on the basis of the diagnosis result such that when the in-cylinder pressure p is at the high H level, the pilot fuel injection timing is set at -θ1 (retardation by θ1), and when the in-cylinder pressure p is at the low L level, the pilot fuel injection timing is set at +θ2 (advancement by θ2). An output from the combustion diagnosis result analysis unit 59 is input into an injection timing correction unit 62.

The correction amounts, namely retardation by θ1 and advancement by θ2, may be set at fixed values or varied in accordance with the operating condition of the engine 1. When the correction amounts are set to be variable, data corresponding to operating conditions are stored on a map in advance.

An injection timing calculation unit 60 then calculates a preset standard pilot fuel injection timing corresponding to the operating condition on the basis of detection signals indicating the rotation speed and the load of the engine 1, detected by the rotation speed detector 46 and the load detector 48, using a map or the like.

The injection timing correction unit 62 then calculates a corrected pilot fuel injection timing by adding the correction amount timing (-θ1, +θ2) input from the combustion diagnosis result analysis unit 59 to the standard pilot fuel injection timing.

During an initial correction, the injection timing correction unit 62 adds the corrected timing to the standard pilot fuel injection timing. During all other corrections, for example a second or third correction, however, the corrected timing is added to an immediately preceding injection timing such that the correction amount timing (-θ1, +θ2) increases cumulatively until a signal indicating the N (optimal) determination level is output by the combustion diagnosis result analysis unit 59.

An allowable correction range setting unit 64 then sets an allowable range of the corrected fuel injection timing calculated by the injection timing correction unit 62. The allowable correction range setting unit 64 is constituted by an average timing calculation unit 66 and an upper/lower limit allowable value setting unit 68.

The average timing calculation unit 66 determines an arithmetic mean of data indicating past fuel injection timings of all of the cylinders of the engine 1 in relation to cylinders including the cylinder diagnosed by the combustion diagnosis device 44 as having less than optimal combustion and all of the cylinders diagnosed as being optimal.

The arithmetic mean value is determined using the previous (immediately preceding) injection timings as the past data. Since the allowable correction range is set on the basis of immediately preceding fuel injection data for a plurality of cylinders, the allowable correction range does not have to be stored in advance as a map, and therefore a capacity of a storage unit can be reduced and a control device can be simplified.

The upper/lower limit allowable value setting unit 68 applies an upper/lower limit value allowable range to the average value calculated by the average timing calculation unit 66. An upper limit value of the upper/lower limit allowable range is set on the basis of experiments or simulation calculations as a value at which high pressure causes a mechanical abnormality such as damage to occur in the cylinder. A lower limit value is set on the basis of experiments or simulation calculations as a value at which misfiring results. Hence, +β (advancement by β, -α (retardation by α) is set as the upper/lower limit allowable range relative to an average timing M.

In another example of the average timing calculation unit 66, instead of calculating the arithmetic mean value using the previous (immediately preceding) injection timings, an average value of the fuel injection timings of all of the cylinders over a fixed past time period may be calculated, whereupon an upper/lower limit allowable range is attached to the average value obtained as a calculation result.

In this case, the average value is calculated on the basis of pilot fuel injection data from a fixed past time period of one hour, one day, one month, or the like, for example. In so doing, the allowable correction range can be set to reflect a history of past operating conditions, and as a result, a more appropriate allowable correction range can be set.

An injection timing determination unit 70 determines whether or not the newly corrected pilot fuel injection timing calculated by the injection timing correction unit 62 is within the allowable correction range set by the allowable correction range setting unit 64.

When the injection timing determination unit 70 determines that the newly corrected pilot fuel injection timing corrected by the injection timing correction unit 62 is within the allowable correction range, a command control unit 72 outputs a signal indicating the newly corrected pilot fuel injection timing to the pilot fuel injection controller 40, whereupon the pilot fuel injection controller 40 operates the pilot fuel injection devices 3.

When the injection timing determination unit 70 determines that the newly corrected pilot fuel injection timing calculated by the injection timing correction unit 62 is not within the allowable correction range, on the other hand, the command control unit 72 outputs a signal indicating the previously implemented (immediately preceding) pilot fuel injection timing to the pilot fuel injection controller 40, whereupon the pilot fuel injection controller 40 operates the pilot fuel injection devices 3 such that a current operation is maintained.

When the determination result obtained by the injection timing determination unit 70 is within the allowable correction range, the pilot fuel injection controller 40 is operated at the corrected pilot fuel injection timing obtained during the current correction, and when the determination result obtained by the injection timing determination unit 70 is outside the allowable correction range, the pilot fuel injection controller 40 is operated at the previously executed (immediately preceding) pilot fuel injection timing. In so doing, correction of the fuel injection timing based on the diagnosis result from the combustion diagnosis device 44 can be maintained within an appropriate range.

As a result, the danger of correcting the pilot fuel injection timing excessively to the advancement side such that the in-cylinder pressure becomes too high or correcting the pilot fuel injection timing excessively to the retardation side such that misfiring results can be avoided, whereby an operation at an offset fuel injection timing can be avoided. As a result, a corrected operation based on the signal from the combustion diagnosis device can be improved in safety and reliability.

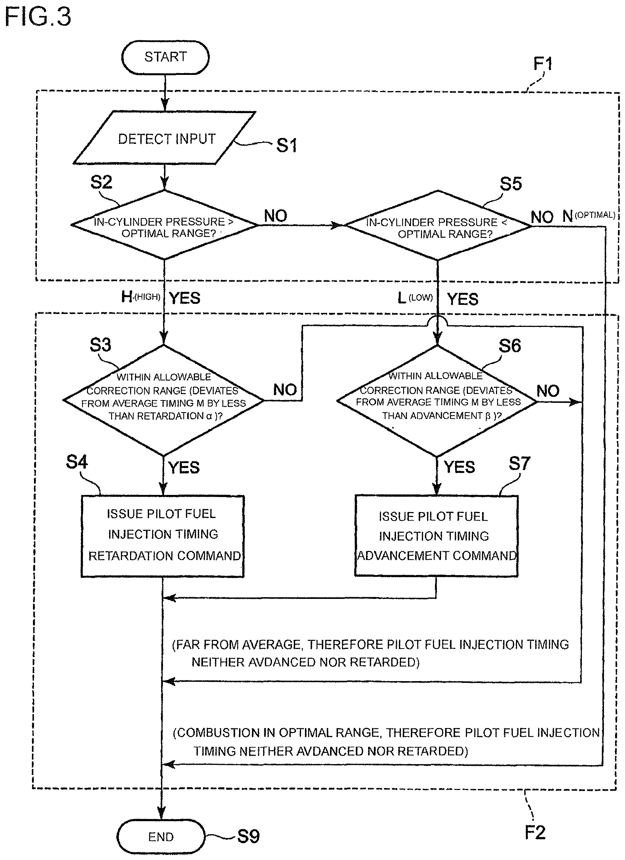

Next, diagnosis control by the combustion diagnosis device 44 and fuel injection timing control by the pilot fuel injection timing control unit 54 based on the diagnosis result from the combustion diagnosis device 44 will be described using a flowchart in Fig. 3.

On the flowchart, a part F1 indicating the diagnosis control executed by the combustion diagnosis device 44 is integrated with a part F2 indicating the pilot fuel injection timing control executed by the pilot fuel injection timing control unit 54 of the overall control device 52.

In Fig. 3, when the control starts, first, in step S1, input signals from the in-cylinder pressure detector 42 and the rotation speed detector 46 and load detector 48 of the engine 1 are read. Next, in step S2, a determination is made as to whether or not the detected in-cylinder pressure exceeds the optimal range. When the determination is affirmative, this means that the in-cylinder pressure exceeds the optimal range, and therefore a signal indicating the H (high) range of Fig. 6 is output. When the determination is negative, a further determination is made in step S5 as to whether or not the in-cylinder pressure is lower than the optimal range. When the determination is affirmative, this means that the in-cylinder pressure is lower than the optimal range, and therefore a signal indicating the L (low) range of Fig. 6 is output.

Further, when the determination of step S5 is negative, this means that the in-cylinder pressure is in the optimal range, and therefore a signal indicating the N (optimal) range of Fig. 6 is output. When the N (optimal) range signal is output, this means that combustion is within the optimal range, and therefore the control is terminated in step S9 without either advancing or retarding the pilot fuel injection timing.

When it is determined in step S2 that the in-cylinder pressure exceeds the optimal range, the control advances to step S3, where a determination is made as to whether or not the newly corrected pilot fuel injection timing is within the allowable correction range.

More specifically, using the average timing M and the lower limit allowable retardation value α set by the average timing calculation unit 66 and the upper/lower limit allowable value setting unit 68 of the allowable correction range setting unit 64, a determination is made in step S3 as to whether or not the newly corrected pilot fuel injection timing deviates from the average timing M by less than the retardation value α.

When the determination is affirmative, the control advances to step S4, where a command to retard the pilot fuel injection timing to the newly corrected pilot fuel injection timing is issued. The control is then terminated in step S9. When the determination of step S3 is negative, on the other hand, this means that the newly corrected pilot fuel injection timing is far removed from the average timing M, and therefore injection is performed at the previous (immediately preceding) pilot fuel injection timing without correcting the pilot fuel injection timing to the retardation side.

When it is determined in step S5 that the in-cylinder pressure is lower than the optimal range, the control advances to step S6, where a determination is made as to whether or not the newly corrected pilot fuel injection timing is within the allowable correction range. More specifically, using the average timing M and the upper limit allowable advancement value β, a determination is made in step S6 as to whether or not the newly corrected pilot fuel injection timing deviates from the average timing M by less than the advancement value β.

When the determination is affirmative, the control advances to step S7, where a command to advance the pilot fuel injection timing to the newly corrected pilot fuel injection timing is issued. The control is then terminated in step S9. When the determination of step S6 is negative, on the other hand, this means that the newly corrected pilot fuel injection timing is far removed from the average timing M, and therefore injection is performed at the previous (immediately preceding) pilot fuel injection timing without correcting the pilot fuel injection timing to the advancement side.

According to this embodiment, as described above, even when the signal indicating the combustion diagnosis result transmitted to the pilot fuel injection timing control unit 54 from the combustion diagnosis device 44 that determines whether or not combustion is optimal, including whether or not knocking or misfiring has occurred in the engine 1, is output or input while indicating an incorrect diagnosis result, correction of the pilot fuel injection timing on the basis of the combustion diagnosis result can be maintained within an allowable range. In so doing, the danger of a situation arising in which the pilot fuel injection timing is continuously corrected to the advancement side or the retardation side such that an operation is continued at an offset injection timing can be avoided, and as a result, a corrected operation based on the signal from the combustion diagnosis device 44 can be improved in safety and reliability.

Further, in this embodiment, the gas engine 1 to which the pilot fuel injection device 3 for injecting pilot fuel into the precombustion chamber 7 is attached was described as an example, but the present invention may be applied to any engine that corrects a fuel injection timing cumulatively until optimal combustion is restored on the basis of a diagnosis result from a combustion diagnosis device, and therefore a corrected operation based on a signal from the combustion diagnosis device can be improved in safety and reliability likewise when the present invention is applied to an ignition system of a gas engine that generates a torch flame when gas fuel is injected into a precombustion chamber and ignited by a spark plug.

### INDUSTRIAL APPLICABILITY

According to the present invention, even when a signal indicating a combustion diagnosis result transmitted to a fuel injection control device (an injection timing control device) from a combustion diagnosis device that determines whether or not combustion is optimal, including whether or not knocking or misfiring has occurred in an engine, is output or input while indicating an incorrect diagnosis result, correction of a fuel injection timing on the basis of the combustion diagnosis result can be maintained within an allowable range, and as a result, a corrected operation based on the signal from the combustion diagnosis device can be improved in safety and reliability. The present invention can therefore be applied to a multiple cylinder engine that includes a combustion diagnosis device and corrects a combustion condition cumulatively on the basis of a signal from the combustion diagnosis device.

## Claims

1. A method of controlling a pilot injection timing when an abnormality occurs in a combustion diagnosis signal relating to an engine (1) having a combustion diagnosis device (44) that determines whether or not combustion is optimal, and a fuel injection control device (40) that controls a fuel injection device (3) upon reception of a diagnosis result from the combustion diagnosis device, wherein
the engine (1) is a multiple cylinder gas engine including a precombustion chamber (7), a torch flame being discharged into a main combustion chamber (15) through precombustion chamber discharge ports (17), and
a fuel injection timing is a timing at which pilot fuel is injected into the precombustion chamber, and
the method comprising the steps of:
diagnosing a combustion condition of respective cylinders using the combustion diagnosis device (44) on a basis of an in-cylinder pressure, an engine rotation speed and an engine load;
repeatedly correcting a standard fuel injection timing set in advance on the basis of the engine rotation speed and the engine load in relation to a cylinder in which combustion is determined to be less than optimal such that a correction amount accumulates until combustion is determined to be optimal;
the method being **characterized by**:
setting an allowable range of a fuel injection timing on the basis of data indicating past fuel injection timings of all of the plurality of cylinders by applying an upper/lower limit value allowable range to an arithmetic mean value of the data indicating the past fuel injection timings of all of a plurality of cylinders of the engine; determining whether or not a newly corrected injection timing is within the allowable range; and
operating the fuel injection device (3) at the newly corrected injection timing when a result of the determination is within the allowable range; and
when the result of the determination is outside the allowable range, the fuel injection control device (40) is operated at a previous injection timing.

2. The method of controlling a pilot injection timing when an abnormality occurs in a combustion diagnosis signal relating to an engine according to claim 1, **characterized in that** in the step of setting the allowable range, the allowable range is set by calculating an average value of immediately preceding fuel injection timings of all of the cylinders, and attaching an upper/lower limit allowable range to the calculated average value.

3. The method of controlling a pilot injection timing when an abnormality occurs in a combustion diagnosis signal relating to an engine according to claim 1, **characterized in that** in the step of setting the allowable range, the allowable range is set by calculating an average value of the fuel injection timings of all of the cylinders over a fixed past time period, and attaching an upper/lower limit allowable range to the average value obtained as a calculation result.

4. A device (54) for controlling a pilot injection timing when an abnormality occurs in a combustion diagnosis signal relating to an engine (1) having a combustion diagnosis device (44) that determines whether or not combustion is optimal, and a fuel injection control device (40) that controls a fuel injection device (3) upon reception of a diagnosis result from the combustion diagnosis device,
wherein
the engine (1) is a multiple cylinder gas engine including a precombustion chamber (7), a torch flame being discharged into a main combustion chamber (15) through precombustion chamber discharge ports (17), and
a fuel injection timing is a timing at which pilot fuel is injected into the precombustion chamber, and
the device comprising:
an injection timing calculation unit (60) which calculates a preset standard fuel injection timing on the basis of an engine rotation speed and an engine load;
an injection timing correction unit (62) which repeatedly corrects the standard fuel injection timing calculated by the injection timing calculation unit (60) in relation to a cylinder in which combustion is determined by the combustion diagnosis device (44) on a basis of an in-cylinder pressure, an engine rotation speed and an engine load to be less than optimal such that a correction amount accumulates until combustion is determined to be optimal;
the device being **characterized by**:
an allowable range setting unit (64) which is constituted by an average timing calculation unit (66) and an upper/lower limit allowable value setting unit (68) and sets an allowable range of the fuel injection timing on the basis of data indicating past fuel injection timings of all of a plurality of cylinders;
an injection timing determination unit (70) which determines whether or not a current fuel injection timing corrected by the injection timing correction unit (62) is within the allowable range set by the allowable range setting unit (64); and
a command control unit (72) which outputs a command to the fuel injection control device (40) to perform injection at the newly corrected fuel injection timing when the determination unit determines that the newly corrected fuel injection timing is within the allowable range; and when the determination result obtained by the injection timing determination unit is outside the allowable range, the command control unit outputs a command to the fuel injection control device to perform injection at a previous fuel injection timing.

## Patentansprüche

1. Verfahren zum Steuern eines Voreinspritzungs-Timings, wenn eine Anomalität in einem Verbrennungsdiagnosesignal auftritt, das sich auf einen Motor (1) bezieht, der eine Verbrennungsdiagnoseeinrichtung (44), welche bestimmt, ob oder ob nicht die Verbrennung optimal ist, und eine Kraftstoffeinspritzungs-Steuerungseinrichtung (40) hat, die eine Kraftstoffeinspritzungseinrichtung (3) auf den Empfang eines Diagnoseergebnisses von der Verbrennungsdiagnoseeinrichtung hin steuert, wobei
- der Motor (1) ein Mehrzylinder-Gasmotor ist, der eine Vorkammer (7) beinhaltet, wobei eine Brennerflamme in eine Hauptkammer (15) durch Vorkammer-Ausstoßöffnungen (17) ausgestoßen wird, und ein Kraftstoffeinspritzungs-Timing ein Timing ist, bei welchem Voreinspritzungs-Kraftstoff in die Vorkammer eingespritzt wird, und
- das Verfahren die Schritte umfasst:
- Diagnostizieren einer Verbrennungsbedingung von jeweiligen Zylindern unter Verwendung der Verbrennungsdiagnoseeinrichtung (44) auf einer Basis eines Innenzylinderdrucks, einer Motordrehzahl und einer Motorlast;
- wiederholtes Korrigieren eines im Voraus eingestellten Standard-Kraftstoffeinspritzungs-Timings auf der Basis der Motordrehzahl und der Motorlast in Bezug auf einen Zylinder, in welchem bestimmt wird, dass die Verbrennung weniger als optimal ist, so dass sich ein Korrekturwert akkumuliert, bis bestimmt wird, dass die Verbrennung optimal ist;
- wobei das Verfahren **gekennzeichnet ist durch**:
- Einstellen eines erlaubten Bereichs eines Kraftstoffeinspritzungs-Timings auf der Basis von Daten, die vergangene Kraftstoffeinspritzungs-Timings von allen der Mehrzahl von Zylindern angeben, indem ein Oberer/unterer-Grenzwert-erlaubter-Bereich auf einen arithmetischen Mittelwert der Daten angewendet wird, die die vergangenen Kraftstoffeinspritzungs-Timings aller von einer Mehrzahl von Zylindern des Motors angeben; Bestimmen, ob oder ob nicht ein neu korrigiertes Einspritzungs-Timing innerhalb des erlaubten Bereichs ist; und Betreiben der Kraftstoffeinspritzungseinrichtung (3) bei dem neu korrigierten Einspritzungs-Timing, wenn ein Ergebnis der Bestimmung innerhalb des erlaubten Bereichs ist; und
- wenn das Ergebnis der Bestimmung außerhalb des erlaubten Bereichs ist, die Kraftstoffeinspritzungs-Steuerungseinrichtung (40) bei einem vorherigen Einspritzungs-Timing betrieben wird.

2. Verfahren zum Steuern eines Voreinspritzungs-Timings, wenn eine Anomalität in einem Verbrennungsdiagnosesignal auftritt, das sich auf einen Motor bezieht, nach Anspruch 1, **dadurch gekennzeichnet, dass** in dem Schritt des Einstellens des erlaubten Bereichs der erlaubte Bereich eingestellt wird, indem ein Mittelwert von unmittelbar vorhergehenden Kraftstoffeinspritzungs-Timings aller Zylinder berechnet wird und ein Oberer/unterer-Grenzwert-erlaubter-Bereich an den berechneten Mittelwert angefügt wird.

3. Verfahren zum Steuern eines Voreinspritzungs-Timings, wenn eine Anomalität in einem Verbrennungsdiagnosesignal auftritt, das sich auf einen Motor bezieht, nach Anspruch 1, **dadurch gekennzeichnet, dass** in dem Schritt des Einstellens des erlaubten Bereichs der erlaubte Bereich eingestellt wird, indem ein Mittelwert der Kraftstoffeinspritzungs-Timings aller Zylinder über einen festen vergangenen Zeitraum eingestellt wird und ein Oberer/unterer-Grenzwert-erlaubter-Bereich an den als ein Berechnungsergebnis erhaltenen Bereich angefügt wird.

4. Vorrichtung (54) zum Steuern eines Voreinspritzungs-Timings, wenn eine Anomalität in einem Verbrennungsdiagnosesignal auftritt, das sich auf einen Motor (1) bezieht, der eine Verbrennungsdiagnoseeinrichtung (44), welche bestimmt, ob oder ob nicht die Verbrennung optimal ist, und eine Kraftstoffeinspritzungs-Steuerungseinrichtung (40) hat, die eine Kraftstoffeinspritzungseinrichtung (3), auf den Empfang eines Diagnoseergebnisses von der Verbrennungsdiagnoseeinrichtung hin steuert,
- wobei
- der Motor (1) ein Mehrzylinder-Gasmotor ist, der eine Vorkammer (7) beinhaltet, wobei eine Brennerflamme in eine Hauptkammer (15) durch Vorkammer-Ausstoßöffnungen (17) ausgestoßen wird, und ein Kraftstoffeinspritzungs-Timing ein Timing ist, bei welchem Voreinspritzungs-Kraftstoff in die Vorkammer eingespritzt wird, und
- die Vorrichtung umfasst:
- eine Einspritzungs-Timing-Berechnungseinheit (60), die ein voreingestelltes Standard-Kraftstoffeinspritzungs-Timing auf der Basis einer Motordrehzahl und einer Motorlast einstellt;
- eine Einspritzungs-Timing-Korrektureinheit (62), die wiederholt das Standard-Kraftstoffeinspritzungs-Timing, das von der Einspritzungs-Timing-Berechnungseinheit (60) berechnet wurde, in Bezug auf einen Zylinder korrigiert, in welchem mittels der Verbrennungsdiagnoseeinrichtung (44) auf der Basis eines Innenzylinderdrucks, einer Motordrehzahl und einer Motorlast bestimmt wird, dass die Verbrennung weniger als optimal ist, so dass sich ein Korrekturwert akkumuliert, bis bestimmt wird, dass die Verbrennung optimal ist;
- wobei die Vorrichtung **gekennzeichnet ist durch**:
- eine Erlaubter-Bereich-Einstellungseinheit (64), welche aus einer Mittelwert-Timing-Berechnungseinheit (66) und einer Oberer/unterer-Grenzwert-Erlaubter-Bereich-Einstellungseinheit (68) gebildet ist und einen erlaubten Bereich des Kraftstoffeinspritzungs-Timings auf der Basis von Daten einstellt, die vergangene Timings aller von einer Mehrzahl von Zylindern angeben;
- eine Einspritzungs-Timing-Bestimmungseinheit (70), die bestimmt, ob oder ob nicht ein derzeitiges von der Einspritzungs-Timing-Korrektureinheit (62) korrigiertes Kraftstoffeinspritzungs-Timing innerhalb des von der Erlaubter-Bereich-Einstellungseinheit (64) eingestellten erlaubten Bereichs ist; und
- eine Befehls-Steuerungseinheit (72), die einen Befehl an die Kraftstoffeinspritzungs-Steuerungseinrichtung (40) ausgibt, um eine Einspritzung bei dem neu korrigierten Einspritzungs-Timing vorzunehmen, wenn die Bestimmungseinheit bestimmt, dass das neu korrigierte Einspritzungs-Timing innerhalb des erlaubten Bereichs ist; und
- wenn das von der Einspritzungs-Timing-Bestimmungseinheit erhaltene Bestimmungsergebnis außerhalb des erlaubten Bereichs ist, die Befehls-Steuerungseinheit einen Befehl an die Kraftstoffeinspritzungs-Steuerungseinrichtung ausgibt, um eine Einspritzung bei einem vorherigen Kraftstoffeinspritzungs-Timing durchzuführen.

## Revendications

1. Procédé de commande d'un calage de l'injection pilote lorsqu'une anomalie se produit dans un signal de diagnostic de combustion concernant un moteur (1) possédant un dispositif de diagnostic de combustion (44) qui détermine si la combustion est optimale ou non, et un dispositif de commande d'injection de carburant (40) qui commande un dispositif d'injection de carburant (3) lors de la réception d'un résultat de diagnostic provenant du dispositif de diagnostic de combustion, dans lequel le moteur (1) est un moteur à gaz du type à plusieurs cylindres incluant une chambre de précombustion (7), une flamme torche étant déchargée dans une chambre de combustion principale (15) à travers des orifices de décharge de chambre de précombustion (17), et un calage de l'injection de carburant est un calage auquel du carburant pilote est injecté dans la chambre de précombustion, et le procédé comprenant les étapes consistant à :
diagnostiquer un état de combustion des cylindres respectifs en utilisant le dispositif de diagnostic de combustion (44) sur une base d'une pression régnant dans les cylindres, d'une vitesse de rotation du moteur et d'une charge sur le moteur ;
corriger de manière répétée un calage de l'injection de carburant standard réglé à l'avance sur la base de la vitesse de rotation du moteur et de la charge sur le moteur, en ce qui concerne un cylindre dans lequel la combustion est déterminée comme étant moins qu'optimale, d'une manière telle qu'une quantité de correction s'accumule jusqu'à ce que la combustion soit déterminée comme étant optimale ;
le procédé étant **caractérisé par** le fait de :
régler une plage admissible d'un calage de l'injection de carburant sur la base de données indiquant des calages passés de l'injection de carburant de la totalité de la pluralité de cylindres en appliquant une plage admissible de valeurs limites supérieure/inférieure à une valeur moyenne arithmétique des données indiquant les calages passés de l'injection de carburant de la totalité d'une pluralité de cylindres du moteur;
déterminer si un calage de l'injection nouvellement corrigé est ou non à l'intérieur de la plage admissible ; et
mettre en oeuvre le dispositif d'injection de carburant (3) au calage de l'injection nouvellement corrigé lorsqu'un résultat de la détermination est à l'intérieur de la plage admissible ; et
lorsque le résultat de la détermination est à l'extérieur de la plage admissible, le dispositif de commande de l'injection de carburant (40) est mis en oeuvre à un calage de l'injection précédent.

2. Procédé de commande d'un calage de l'injection pilote lorsqu'une anomalie se produit dans un signal de diagnostic de combustion concernant un moteur selon la revendication 1, **caractérisé en ce que**, dans l'étape de réglage de la plage admissible, la plage admissible est réglée en calculant une valeur moyenne de calages de l'injection de carburant immédiatement précédents de tous les cyclindres, et en attachant une plage admissible de limites supérieure/inférieure à la valeur moyenne calculée.

3. Procédé de commande d'un calage de l'injection pilote lorsqu'une anomalie se produit dans un signal de diagnostic de combustion concernant un moteur selon la revendication 1, **caractérisé en ce que**, dans l'étape de réglage de la plage admissible, la plage admissible est réglée en calculant une valeur moyenne des calages de l'injection de carburant de la totalité des cylindres sur un laps de temps passé fixé, et en attachant une plage admissible de limites supérieure/inférieure à la valeur moyenne obtenue comme résultat du calcul.

4. Dispositif (54) pour la commande d'un calage de l'injection pilote lorsqu'une anomalie se produit dans un signal de diagnostic de combustion concernant un moteur (1) possédant un dispositif de diagnostic de combustion (44) qui détermine si la combustion est optimale ou non, et un dispositif de commande d'injection de carburant (40) qui commande un dispositif d'injection de carburant (3) lors de la réception d'un résultat de diagnostic provenant du dispositif de diagnostic de combustion,
dans lequel
le moteur (1) est un moteur à gaz du type à plusieurs cylindres incluant une chambre de précombustion (7), une flamme torche étant déchargée dans une chambre de combustion principale (15) à travers des orifices de décharge de chambre de précombustion (17), et un calage de l'injection de carburant est un calage auquel du carburant pilote est injecté dans la chambre de précombustion, et le dispositif comprenant :
une unité de calcul de calage de l'injection (60) qui calcule un calage de l'injection de carburant standard préréglé sur la base d'une vitesse de rotation du moteur et d'une charge sur le moteur;
une unité de correction de calage de l'injection (62) qui corrige de manière répétée le calage de l'injection de carburant standard calculé par l'unité de calcul de calage de l'injection (60) en ce qui concerne un cylindre dans lequel la combustion est déterminée par le dispositif de diagnostic de combustion (44) sur une base d'une pression régnant dans les cylindres, d'une vitesse de rotation de moteur et d'une charge sur le moteur,
comme étant moins qu'optimale, d'une manière telle qu'une quantité de correction s'accumule jusqu'à ce que la combustion soit déterminée comme étant optimale ;
le dispositif étant **caractérisé par** :
une unité de réglage de plage admissible (64) qui est constituée par une unité de calcul de calage moyen (66) et par une unité de réglage de valeurs limites supérieure/inférieure admissibles (68), et qui règle une plage admissible du calage de l'injection de carburant sur la base de données indiquant des calages passés de l'injection de carburant de la totalité d'une pluralité de cylindres ;
une unité de détermination de calage de l'injection (70) qui détermine si un calage en vigueur de l'injection de carburant corrigé par l'unité de correction de calage de l'injection (62) est ou non à l'intérieur de la plage admissible réglée par l'unité de réglage de plage admissible (64) ; et
une unité de commande d'ordres (72) qui envoie un ordre au dispositif de commande de d'injection de carburant (40) pour exécuter l'injection au calage de l'injection de carburant nouvellement corrigé lorsque l'unité de détermination détermine que le calage de l'injection de carburant nouvellement corrigé est à l'intérieur de la plage admissible ; et
lorsque le résultat de détermination obtenu par l'unité de détermination de calage de l'injection est à l'extérieur de la plage admissible, l'unité de commande d'ordres sort un ordre vers le dispositif de commande d'injection de carburant pour exécuter l'injection à un calage précédent de l'injection de carburant.
